# EUROPÄISCHE PATENTANMELDUNG

(11) **EP 2 928 034 A1**
(43) Veröffentlichungstag der Anmeldung: **07.10.2015**
(21) Anmeldenummer: 15157144.5
(22) Anmeldetag: 02.03.2015
(51) Int. Cl.: H02G 3/22, F16L 5/10

(54) **Leitungsdurchführung**

(30) Priorität: 07.03.2014 DE 102014003038
(71) Anmelder: Murrplastik Systemtechnik GmbH, 71570 Oppenweiler (DE)
(72) Erfinder:
(74) Vertreter: Patentanwälte Bregenzer und Reule Partnerschaftsgesellschaft mbB

(57) **Zusammenfassung**

Die Erfindung betrifft eine Vorrichtung (16, 116, 216) zum Abdecken und/oder Abdichten eines zur Durchführung von Leitungen, insbesondere von Kabeln, bestimmten Wanddurchbruchs (12) mit einer am Durchbruchsrand (14) der Wand (10) befestigbaren, mehrere über Randschlitze (26) zum Ein- und Ausführen von Leitungen zugängliche Plattenöffnungen (20) aufweisenden Halteplatte (18) aus elastomerem Material, mit mehreren in die Plattenöffnungen (20) lösbar eingesetzten und dort fixierten Tüllen (28) aus elastomerem Material, von denen zumindest ein Teil mit mindestens einer Durchgangsöffnung (32) für eine Leitung versehen ist, und mit einem an der Halteplatte (18) lösbar befestigten, deren Randschlitze (26) zumindest teilweise überdeckenden und an einer sich quer zur Durchgangsrichtung der Leitungen erstreckenden Vorderseite (22) anliegenden starren Rahmen (44). Erfindungsgemäß ist vorgesehen, dass auf der der Vorderseite (22) abgewandten Rückseite (24) der Halteplatte (18) anliegend eine mit dem Rahmen (44) unter Druckbeaufschlagung der Halteplatte (18) lösbar verbundene Gegenplatte (52) angeordnet ist.

## Beschreibung

Die Erfindung betrifft eine Vorrichtung zum Abdecken und/oder Abdichten eines zur Durchführung von Leitungen bestimmten Wanddurchbruchs gemäß Oberbegriff des Anspruchs 1.

Vorrichtungen dieser Art, wie sie beispielsweise aus der EP 1 595 318 B1 bekannt sind, werden häufig dafür verwendet, Kabel durch einen Durchbruch in der Wand eines Schaltschranks unter gleichzeitiger Abdichtung des Durchbruchs durchzuführen. Zu diesem Zweck werden die Kabel von Tüllen aus elastomerem Material umschlossen, welche in Plattenöffnungen einer Halteplatte aus elastomerem Material eingeschoben werden. Die Plattenöffnungen sind über Randschlitze zugänglich, um die Kabel in radialer Richtung einzuführen. Durch den Druck, der auf die Tüllen beim Einschieben in die Plattenöffnungen ausgeübt wird, legen diese sich rings um das betreffende Kabel und sorgen so für eine Abdichtung. Die Halteplatte mit den in ihr aufgenommenen Tüllen und Kabeln wird am Durchbruchsrand der Wand befestigt und mit einem starren Rahmen versehen, der die Randschlitze zumindest teilweise überdeckt.

Für die meisten Anwendungen wird mit den vorbekannten Vorrichtungen eine ausreichende Dichtigkeit und Zugentlastung erzielt. Höhere Anforderungen an die Dichtigkeit und/oder Zugentlastung können aber nur mit zusätzlichen Maßnahmen erfüllt werden.

Es ist daher Aufgabe der Erfindung, eine Vorrichtung der eingangs genannten Art derart weiterzubilden, dass sie eine erhöhte Dichtigkeit und/oder eine bessere Zugentlastung gewährleistet.

Diese Aufgabe wird erfindungsgemäß durch eine Vorrichtung mit den Merkmalen des Anspruchs 1 erfüllt. Vorteilhafte Weiterbildungen der Erfindung sind Gegenstand der abhängigen Ansprüche.

Der Erfindung liegt der Gedanke zugrunde, die aus elastomerem Material bestehende Halteplatte sowohl von der Vorderseite als auch von der Rückseite mit Druck zu beaufschlagen, so dass sie komprimiert wird. Aufgrund der Kompression verengen sich die Plattenöffnungen und üben Druck auf die elastomeren Tüllen aus, die dann unter Erzielung einer besseren Dichtwirkung an die Kabel gepresst werden. Dabei wird der Druck auf die Vorderseite durch den Rahmen und der Druck auf die Rückseite durch eine mit dem Rahmen lösbar verbundene Gegenplatte ausgeübt, die an der Rückseite anliegt. Die Tüllen können, wie in der EP 1 595 318 B1 beschrieben, über einen elastisch aufweitbaren Schlitz einen Zugang zur Durchgangsöffnung bereitstellen und in Durchgangsrichtung der Leitungen in die zugehörigen Plattenöffnungen einschiebbar sein. Es ist jedoch auch möglich, dass die Tüllen jeweils aus zwei Teilen bestehen und/oder quer zur Durchgangsrichtung der Leitungen über die Randschlitze der Halteplatte in die zugehörigen Plattenöffnungen einschiebbar sind, wie jeweils in der EP 1 606 867 B1 beschrieben, auf deren Offenbarungsgehalt in diesem Zusammenhang verwiesen wird. Zudem können eine oder mehrere der Tüllen als Blindtüllen ohne Durchgangsöffnung ausgebildet sein oder als Mehrfachtüllen mit zwei oder mehr Durchgangsöffnungen für jeweils eine Leitung.

Es wird bevorzugt, dass die Gegenplatte die Rückseite unter Aussparung der Plattenöffnungen vollständig bedeckt. Desweiteren wird bevorzugt, dass der Rahmen die Vorderseite unter Aussparung der Plattenöffnungen vollständig bedeckt. Eine zumindest teilweise Aussparung der Plattenöffnungen auf beiden Seiten ist notwendig, damit die Kabel auch durch den Rahmen und die Gegenplatte durchgeführt werden können. Dagegen ist es vorteilhaft, auf eine möglichst große Fläche in den Bereichen zwischen den Plattenöffnungen Druck auszuüben, um eine möglichst starke Kompression der Halteplatte zu erzielen. Dabei wird bevorzugt, dass die Halteplatte, der Rahmen und die Gegenplatte mittels durch Schraubenöffnungen durch sie durchgeführten Schrauben miteinander verbunden sind. Die Schrauben können allein die Befestigung des Rahmens, der Gegenplatte und der Halteplatte aneinander zum Zweck haben oder gleichzeitig auch der Befestigung der gesamten Vorrichtung am Durchbruchsrand der Wand dienen. Hierzu wird bevorzugt, dass die Halteplatte einen die Plattenöffnungen aufweisenden Durchführbereich und mindestens einen seitlich vom Durchführbereich abstehenden Befestigungsbereich mit einer Anlagefläche zur Anlage an der Wand aufweist, durch den zumindest ein Teil der Schraubenöffnungen der Halteplatte verlaufen kann.

Zweckmäßig weist der Durchführbereich gegenüber dem mindestens einen Befestigungsbereich einen in Durchgangsrichtung der Leitungen vorspringenden Absatz zum Eintauchen in den Wanddurchbruch auf, dessen Größe vorteilhaft in etwa der Größe des Wanddurchbruchs entspricht, so dass er der Positionierung der Halteplatte im Wanddurchbruch bei der Montage dienen kann. Ebenso ist es möglich, dass die Abdeckpartie der Gegenplatte einen gegenüber der Befestigungspartie in Durchgangsrichtung der Leitungen vorstehenden Absatz zum Eintauchen in den Wanddurchbruch aufweist, dessen Abmessungen vorteilhaft den Abmessungen des Absatzes der Halteplatte entsprechen, so dass die Gegenplatte im Wanddurchbruch an der Rückseite der Halteplatte anliegt. Auch der Absatz der Gegenplatte erleichtert somit eine Positionierung bei der Montage.

Um den Rahmen und die Gegenplatte hinreichend starr auszubilden, wird bevorzugt, dass sie aus Metall, insbesondere aus dem leichten Aluminium, gefertigt sind. Der Rahmen kann zudem mehrteilig ausgebildet sein mit mindestens einem die Randschlitze der Halteplatte zumindest teilweise überdeckenden Randteil und einem mit dem mindestens einen Randteil lösbar verbundenen, an der Vorderseite der Halteplatte anliegenden Abdeckteil. Der Rahmen kann dann als letztes Bauteil der Vorrichtung auf einfache Weise montiert werden, ohne dass die Leitungen in ihrer Längsrichtung durch ihn durchgeführt werden müssen.

Im Folgenden wird die Erfindung anhand dreier in der Zeichnung schematisch dargestellter Ausführungsbeispiele näher erläutert. Es zeigen
- Fig. 1: eine Kabeldurchführvorrichtung gemäß einem ersten Ausführungsbeispiel in Explosionsdarstellung;
- Fig. 2: eine Kabeldurchführvorrichtung gemäß einem zweiten Ausführungsbeispiel in Explosionsdarstellung und
- Fig. 3: eine Kabeldurchführvorrichtung gemäß einem dritten Ausführungsbeispiel in Explosionsdarstellung.

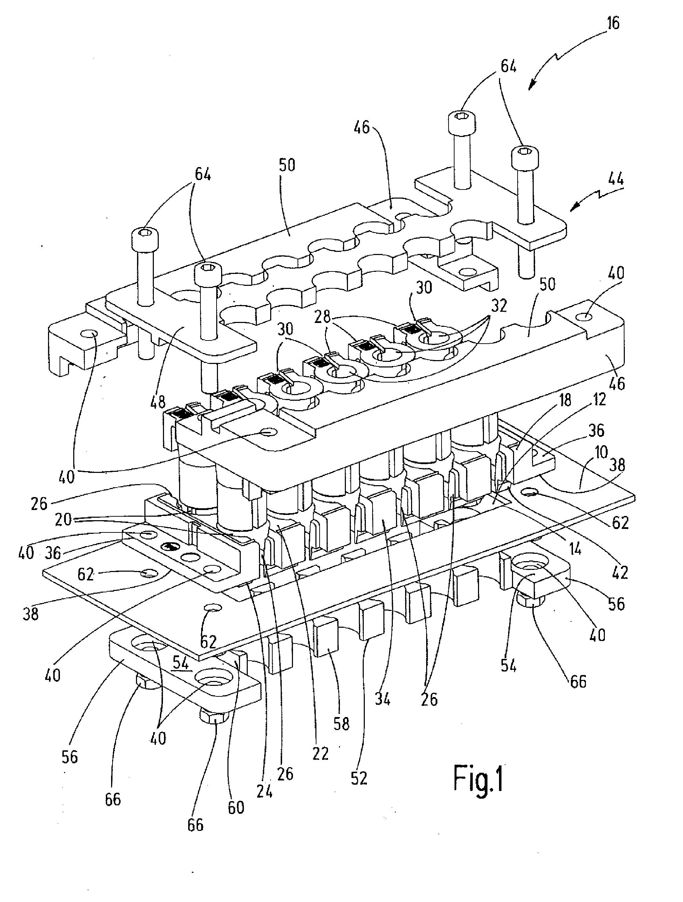

In Fig. 1 ist ein Ausschnitt einer Wand 10 gezeigt, die einen rechteckigen Wanddurchbruch 12 aufweist, welcher von einem Durchbruchsrand 14 umrandet wird. Der Wanddurchbruch 12 ist dafür bestimmt, Kabel oder andere Leitungen bzw. Langkörper wie Schläuche oder Rohre durch die Wand 10 durchzuführen. Um den Wanddurchbruch 12 abzudichten, ist eine Durchführvorrichtung 16 am Durchbruchsrand 14 lösbar befestigt. Die Durchführvorrichtung 16 weist eine Halteplatte 18 mit einer Anzahl (im gezeigten Ausführungsbeispiel zwölf) Plattenöffnungen 20 auf, die sich in einer Durchgangsrichtung der Kabel von einer Vorderseite 22 bis zu einer Rückseite 24 der Halteplatte 18 erstrecken. Die Plattenöffnungen 20 sind jeweils über einen Randschlitz 26 quer zur Durchgangsrichtung der Leitungen zugänglich, durch den die betreffende Leitung ein- und ausgeführt werden kann. In jeder der Plattenöffnungen 20 ist eine Tülle 28 aufgenommen, die in der Durchgangsrichtung der Leitungen in die jeweilige Plattenöffnung 20 eingeschoben wird. Jede der Tüllen 28 weist einen elastisch aufweitbaren Schlitz 30 auf, der sich in der Durchgangsrichtung über ihre gesamte Länge erstreckt und über den eine Leitung in eine Durchgangsöffnung 32 eingeführt werden kann. Sowohl die Halteplatte 18 als auch die Tüllen 28 sind aus einem elastomeren Material gefertigt, wobei entweder für die Halteplatte 18 und die Tüllen 28 dasselbe Material verwendet wird oder das elastomere Material der Halteplatte 18 härter ist als das der Tüllen 28. Die Tüllen 28 sitzen passgenau in den Plattenöffnungen 20 und werden durch Reibschluss dort festgehalten, während sie jeweils eine der durchgeführten Leitungen rings umschließen und so einerseits den Wanddurchbruch 12 abdichten und andererseits eine Zugentlastung der Leitungen bilden.

Die Halteplatte 18 weist neben einem die Plattenöffnungen 20 aufweisenden, den Wanddurchbruch 12 abdeckenden Durchführbereich 34 zwei von dessen einander gegenüberliegenden Schmalseiten abstehende Befestigungsbereiche 36 auf, welche jeweils eine Anlagefläche 38 zur Anlage am Durchbruchsrand 14 sowie zwei Schraubenöffnungen 40 aufweisen. Der Durchführbereich 34 weist einen von den Anlageflächen 38 in der Durchgangsrichtung der Leitungen vorspringenden Absatz 42 auf, der in den Wanddurchbruch 12 eintaucht und diesen rings auskleidet. Zur Befestigung der Halteplatte am Durchbruchsrand 14 ist ein Rahmen 44 vorgesehen, der dreiteilig ausgebildet ist. Er weist zwei Randteile 46 und ein Abdeckteil 48 auf, die jeweils einstückig aus Aluminium gefertigt sind und Schraubenöffnungen 40 aufweisen. Jedes der Randteile 46 überdeckt die aus dem Wanddurchbruch 12 ragenden Abschnitte der Randschlitze 26 an einer der beiden Längsseiten der Halteplatte 18, während das Abdeckteil 48 an der Vorderseite 22 anliegt. Auch die Randteile 46 weisen jeweils eine Querpartie 50 auf, die an der Vorderseite 22 der Halteplatte 18 anliegt, so dass der Rahmen 44 die gesamte Vorderseite 22 unter Aussparung der Plattenöffnungen 20 bedeckt.

Auf der gegenüberliegenden Seite der Wand 10 ist eine Gegenplatte 52 aus Aluminium angeordnet, die zwei jeweils eine Anlagefläche 54 zur Anlage am Durchbruchsrand 14 und zwei Schraubenöffnungen 40 aufweisende Befestigungspartien 56 sowie eine sich zwischen den Befestigungspartien 56 erstreckende Abdeckpartie 58 aufweist. Die Abdeckpartie 58 weist einen gegenüber den Anlageflächen 54 in der Durchgangsrichtung der Leitungen vorspringenden Absatz 60 auf, der in den Wanddurchbruch 12 eintaucht und diesen rings auskleidet. Die Abdeckpartie 58 liegt im Wanddurchbruch 12 an der Rückseite 24 der Halteplatte 18 an und bedeckt diese vollständig unter Aussparung der Plattenöffnungen 20. Im Durchbruchsrand 14 sind vier Schraubenlöcher 62 angeordnet, so dass Schrauben 64 durch die Schraubenöffnungen 40 in der Halteplatte 18, im Rahmen 44 und in der Gegenplatte 52 sowie durch die Schraubenlöcher 62 durchgeführt werden können. Zunächst wird die Halteplatte 18 mit dem Rahmen 44 mittels der Schrauben 64 und in der Zeichnung nicht näher dargestellten ersten Schraubenmuttern lösbar an der Wand 10 befestigt. Sodann erfolgt mittels zweiter Schraubenmuttern 66 eine lösbare Befestigung der vorgenannten Bauteile aneinander unter gleichzeitiger Druckbeaufschlagung der Halteplatte 18 durch den Rahmen 44 und die Gegenplatte 52, wobei die ersten Schraubenmuttern in den zur Anlagefläche 54 aufgeweiteten Schraubenöffnungen 40 in der Gegenplatte 52 aufgenommen werden. Diese Druckbeaufschlagung bewirkt eine elastische Verengung der Plattenöffnungen 20, so dass quer zur Durchgangsrichtung der Leitungen Druck auf die Tüllen 28 ausgeübt wird, so dass diese fest an die Leitungen gepresst werden. Auf diese Weise wird sowohl die Dichtigkeit im Bereich der Plattenöffnungen 20 und im Bereich der Durchgangsöffnungen 32 als auch die Zugentlastung der Leitungen verbessert.

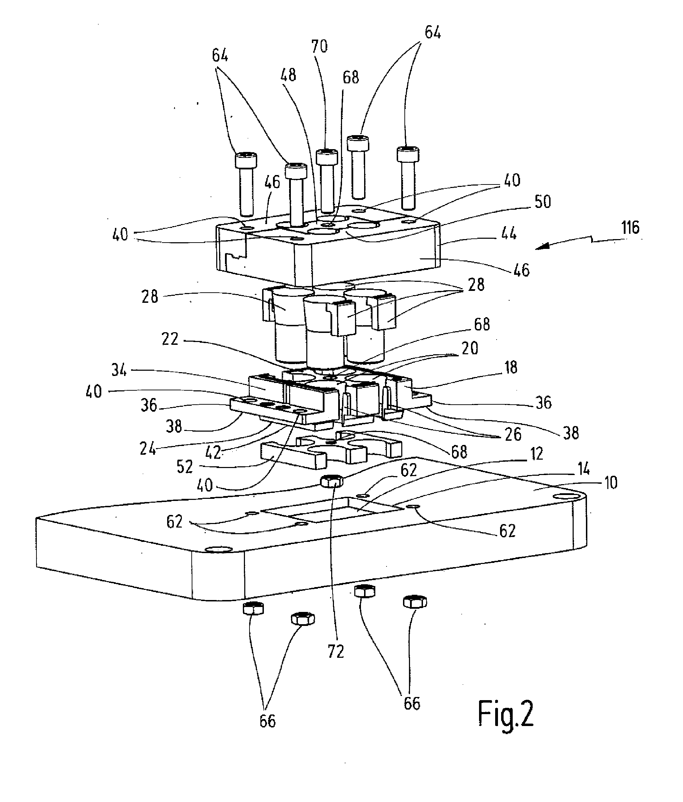

Die Durchführvorrichtung 116 gemäß dem zweiten Ausführungsbeispiel ist in Fig. 2 derart schematisiert gezeigt, dass die Durchgangsöffnungen und die Schlitze der Tüllen 28 nicht dargestellt sind. Mit Ausnahme einiger Details entspricht sie jedoch der Durchführvorrichtung 16 gemäß dem ersten Ausführungsbeispiel, so dass gleiche Bauteile mit gleichen Bezugszeichen versehen sind.

Bei der Durchführvorrichtung 116 weist die Halteplatte 18 nur vier Plattenöffnungen 20 auf. Die Schraubenöffnungen 40 sind zudem nur in den Befestigungsbereichen 36 der Halteplatte 18 und im Rahmen 44 angeordnet, nicht aber in der Gegenplatte 52. Diese weist vielmehr, ebenso wie die Halteplatte 18 und der Rahmen 44, eine zentrale Schraubenöffnung 68 auf, durch die eine zentrale Schraube 70 durchgeführt ist und zur Herstellung des Anpressdrucks des Rahmens 44 und der Gegenplatte 52 an die Halteplatte 18 mit einer weiteren Schraubenmutter 72 verschraubt ist. Die Außenkontur der Gegenplatte 52 entspricht hier der Kontur des Wanddurchbruchs 12 bzw. der Kontur des Absatzes 42 der Halteplatte 18. Eine Befestigungspartie der Gegenplatte 52 ist, im Gegensatz zum ersten Ausführungsbeispiel, nicht vorgesehen.

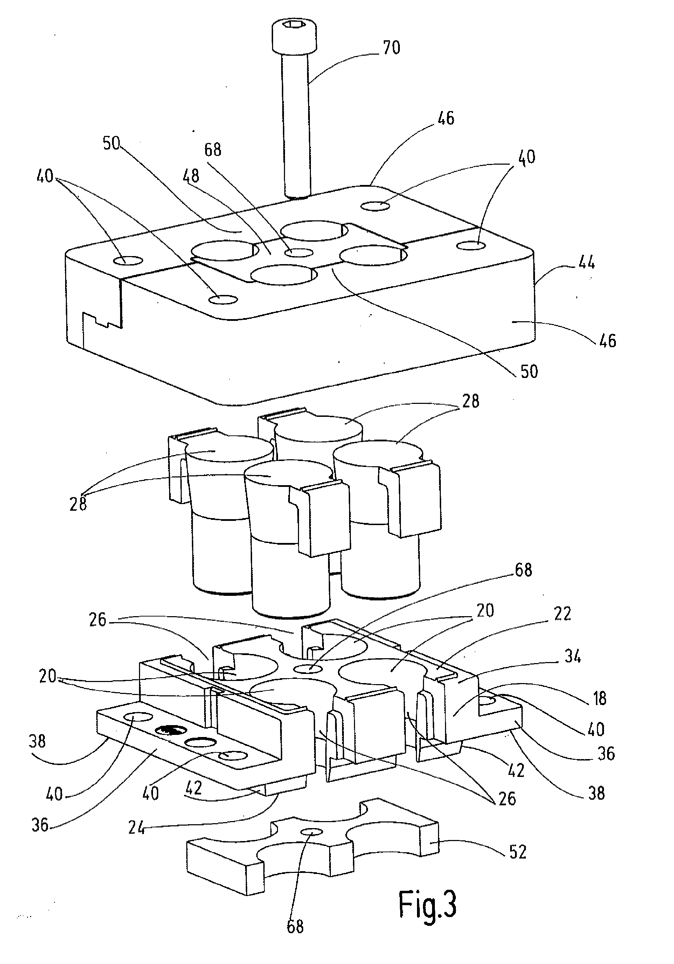

Die Durchführvorrichtung 216 gemäß dem dritten Ausführungsbeispiel (Fig. 3), die dort ohne den Wanddurchbruch 12 dargestellt ist, entspricht im wesentlichen der Durchführvorrichtung 116 gemäß dem zweiten Ausführungsbeispiel. Gleiche Bauteile sind daher mit gleichen Bezugszeichen versehen. Auch in der Darstellung gemäß Fig. 3 sind die Durchgangsöffnungen und die Schlitze der Tüllen 28 nicht dargestellt.

Bei der Durchführvorrichtung 216 gemäß dem dritten Ausführungsbeispiel ist die Gegenplatte 52 kleiner ausgeführt und bedeckt nicht die gesamte Rückseite 24 der Halteplatte 18. Sie ist wiederum mittels einer zentralen Schraube 70 lösbar mit dem Rahmen 44 verbunden, so dass durch Anziehen einer nicht dargestellten Schraubenmutter wiederum die Halteplatte 18 zwischen dem Rahmen 44 und der Gegenplatte 52 eingespannt werden kann.

Zusammenfassend ist folgendes festzuhalten: Die Erfindung betrifft eine Vorrichtung 16, 116, 216 zum Abdecken und/oder Abdichten eines zur Durchführung von Leitungen, insbesondere von Kabeln, bestimmten Wanddurchbruchs 12 mit einer am Durchbruchsrand 14 der Wand 10 befestigbaren, mehrere über Randschlitze 26 zum Ein- und Ausführen von Leitungen zugängliche Plattenöffnungen 20 aufweisenden Halteplatte 18 aus elastomerem Material, mit mehreren in die Plattenöffnungen 20 lösbar eingesetzten und dort fixierten Tüllen 28 aus elastomerem Material, von denen zumindest ein Teil mit mindestens einer Durchgangsöffnung 32 für eine Leitung versehen ist, und mit einem an der Halteplatte 18 lösbar befestigten, deren Randschlitze 26 zumindest teilweise überdeckenden und an einer sich quer zur Durchgangsrichtung der Leitungen erstreckenden Vorderseite 22 anliegenden starren Rahmen 44. Erfindungsgemäß ist vorgesehen, dass auf der der Vorderseite 22 abgewandten Rückseite 24 der Halteplatte 18 anliegend eine mit dem Rahmen 44 unter Druckbeaufschlagung der Halteplatte 18 lösbar verbundene Gegenplatte 52 angeordnet ist.

## Patentansprüche

1. Vorrichtung zum Abdecken und/oder Abdichten eines zur Durchführung von Leitungen, insbesondere von Kabeln, bestimmten Wanddurchbruchs (12) mit einer am Durchbruchsrand (14) der Wand (10) befestigbaren, mehrere über Randschlitze (26) zum Ein- und Ausführen von Leitungen zugängliche Plattenöffnungen (20) aufweisenden Halteplatte (18) aus elastomerem Material, mit mehreren in die Plattenöffnungen (20) lösbar eingesetzten und dort fixierten Tüllen (28) aus elastomerem Material, von denen zumindest ein Teil mit mindestens einer Durchgangsöffnung (32) für eine Leitung versehen ist, und mit einem an der Halteplatte (18) lösbar befestigten, deren Randschlitze (26) zumindest teilweise überdeckenden und an einer sich quer zur Durchgangsrichtung der Leitungen erstreckenden Vorderseite (22) anliegenden starren Rahmen (44), **dadurch gekennzeichnet, dass** auf der der Vorderseite (22) abgewandten Rückseite (24) der Halteplatte (18) anliegend eine mit dem Rahmen (44) unter Druckbeaufschlagung der Halteplatte (18) lösbar verbundene Gegenplatte (52) angeordnet ist.

2. Vorrichtung nach Anspruch 1, **dadurch gekennzeichnet, dass** die Gegenplatte (52) die Rückseite (24) unter zumindest teilweiser Aussparung der Plattenöffnungen (20) vollständig bedeckt.

3. Vorrichtung nach Anspruch 1 oder 2, **dadurch gekennzeichnet, dass** der Rahmen (44) die Vorderseite (22) unter zumindest teilweiser Aussparung der Plattenöffnungen (20) vollständig bedeckt.

4. Vorrichtung nach einem der vorangehenden Ansprüche, **dadurch gekennzeichnet, dass** die Halteplatte (18) einen die Plattenöffnungen (20) aufweisenden Durchführbereich (34) und mindestens einen seitlich vom Durchführbereich (34) abstehenden Befestigungsbereich (36) mit einer Anlagefläche (38) zur Anlage an der Wand (10) aufweist.

5. Vorrichtung nach Anspruch 4, **dadurch gekennzeichnet, dass** der Durchführbereich (34) gegenüber dem mindestens einen Befestigungsbereich (36) einen in Durchgangsrichtung der Leitungen vorspringenden Absatz (42) zum Eintauchen in den Wanddurchbruch (12) aufweist.

6. Vorrichtung nach einem der vorangehenden Ansprüche, **dadurch gekennzeichnet, dass** die Halteplatte (18), der Rahmen (44) und die Gegenplatte (52) mittels durch Schraubenöffnungen (40, 68) durch sie durchgeführten Schrauben (64, 70) miteinander verbunden sind.

7. Vorrichtung nach Anspruch 6 und nach einem der Ansprüche 4 oder 5, **dadurch gekennzeichnet, dass** die Schraubenöffnungen (40, 68) der Halteplatte (18) wenigstens teilweise durch den mindestens einen Befestigungsbereich (36) verlaufen.

8. Vorrichtung nach einem der vorangehenden Ansprüche, **dadurch gekennzeichnet, dass** die Gegenplatte (52) mindestens eine Befestigungspartie (56) mit einer Anlagefläche (54) zur Anlage an der Wand (10) sowie eine Abdeckpartie (58) zur Anlage an der Rückseite (24) der Halteplatte (18) aufweist.

9. Vorrichtung nach Anspruch 8, **dadurch gekennzeichnet, dass** die Abdeckpartie (58) einen gegenüber der mindestens einen Befestigungspartie (56) in Durchgangsrichtung der Leitungen vorstehenden Absatz (60) zum Eintauchen in den Wanddurchbruch (12) aufweist.

10. Vorrichtung nach einem der vorangehenden Ansprüche, **dadurch gekennzeichnet, dass** der Rahmen (44) und die Gegenplatte (52) aus Metall, insbesondere aus Aluminium, gefertigt sind.

11. Vorrichtung nach einem der vorangehenden Ansprüche, **dadurch gekennzeichnet, dass** der Rahmen (44) mehrteilig ausgebildet ist mit mindestens einem die Randschlitze (26) der Halteplatte (18) zumindest teilweise überdeckenden Randteil (46) und einem mit dem mindestens einen Randteil (46) lösbar verbundenen, an der Vorderseite (22) der Halteplatte (18) anliegenden Abdeckteil (48).
